# EUROPÄISCHE PATENTSCHRIFT

(11) **EP 1 468 871 B1**
(45) Veröffentlichungstag und Bekanntmachung des Hinweises auf die Patenterteilung: **30.05.2007**
(21) Anmeldenummer: 04007013.8
(22) Anmeldetag: 24.03.2004
(51) Int. Cl.: B60N 3/10

(54) **Haltevorrichtung für einen Getränkebehälter**
Holding device for a beverage container
Support pour un conteneur à boissons

(30) Priorität: 16.04.2003 DE 10317523
(43) Veröffentlichungstag der Anmeldung: 20.10.2004
(73) Patentinhaber: fischer automotive systems GmbH, 72160 Horb a.N. (DE)
(72) Erfinder: Bieck, Torsten, 72178 Waldachtal (DE); Dettling, Roland, 72160 Horb (DE); Killguss, Werner, 75389 Neuweiler (DE); Aigner, Michaela, 71034 Böblingen (DE); Dietrich, Andre, 71083 Herrenberg (DE)

(56) Entgegenhaltungen:
- EP-A- 1 176 050
- DE-A- 19 926 003
- GB-A- 2 379 203
- US-A- 5 018 633
- US-A- 5 673 891

## Beschreibung

Die Erfindung betrifft eine Haltevorrichtung für einen Getränkebehälter wie beispielsweise eine Getränkedose oder eine Flasche. Derartige Haltevorrichtungen sind in einer nahezu unüberschaubaren Vielzahl unterschiedlicher Konstruktionen an sich bekannt. Sie dienen zum kippsicheren Halten von Getränkebehältern in Kraftfahrzeugen während der Fahrt.

Eine derartige Haltevorrichtung ist bekannt aus der DE-A-199 26 003 A1. Die bekannte Haltevorrichtung weist einen Schlitten auf, der mit einer Schiebeführung schubladenartig zwischen einer eingefahrenen und einer ausgefahrenen Stellung hin- und herverschiebbar geführt ist. In der eingefahrenen Stellung ist der Schlitten versenkt in beispielsweise einem Armaturenbrett eines Kraftwagens. In der ausgefahrenen Stellung steht der Schlitten in einen Fahrgastraum vor und es ist ein oder sind mehrere Getränkebehälter auf den Schlitten stellbar. Zum kippsicheren Halten eines auf den in der ausgefahrenen Stellung befindlichen Schlittens gestellten Getränkebehälters weist die bekannte Haltevorrichtung ein Halteelement auf, das bewegbar am Schlitten angebracht ist und sich beim Ausfahren des Schlittens nach oben bewegt. Das Halteelement stützt den auf den Schlitten gestellten Getränkebehälter mit ausreichendem Abstand oberhalb des Schlittens seitlich ab, um den Getränkebehälter kippsicher zu halten. Beim Einfahren des Schlittens bewegt sich das Halteelement nach unten auf oder in den Schlitten, so dass sich eine Gesamthöhe von Schlitten und Halteelement verkleinert und die Haltevorrichtung in einem niedrigen Bauraum in beispielsweise dem Armaturenbrett des Kraftwagens unterbringbar ist.

Die Auf- und Abbewegung des Halteelements wird bei der bekannten Haltevorrichtung von der Bewegung des Schlittens abgeleitet, eine Kulissensteuerung bewegt das Halteelement beim Verschieben des Schlittens. Dabei kann die Kulissensteuerung das Halteelement beim Ein- und Ausfahren des Schlittens nach oben und nach unten bewegen. Ebenso ist es möglich, dass das Halteelement in einer Richtung, beispielsweise beim Ausfahren des Schlittens nach oben, federbetätigt bewegt und von der Kulissensteuerung in die andere Richtung, also beispielsweise beim Einfahren des Schlittens nach unten, bewegt wird.

Eine weitere derartige Haltevorrichtung für einen Getränkebehälter offenbart die GB-A-2 379 203. Auch diese Haltevorrichtung weist einen Schlitten auf, der mit einer Schiebeführung schubladenartig zwischen einer eingefahrenen und einer ausgefahrenen Stellung hin- und herverschiebbar geführt ist. Ein Halteelement ist mit seitlich abstehenden Kulissenzapfen in kreisbogenförmigen Kulissenbahnen des Schlittens verschiebbar und schwenkbar gelagert. Die Kulissenbahnen bilden eine Führung für das Halteelement, die das Halteelement beim Ausfahren des Schlittens nach oben führt. Beim Ausfahren des Schlittens schwenkt ein vorderer Teil der Haltevorrichtung als Fußstütze für einen einzustellenden Getränkebehälter nach unten und ein hinterer Teil des Halteelements schwenkt nach oben, um den eingestellten Getränkebehälter an seiner einem Armaturenbrett zugewandten Seite seitlich abzustützen. Beim Ausfahren des Schlittens bewegen sich die Kulissenzapfen des Halteelements in den kreisbogenförmigen Kulissenbahnen des Schlittens nach unten und hinten, also entgegen der Ausfahrrichtung. Zum Schwenken des Halteelements weist die bekannte Haltevorrichtung Schwenkhebel auf, die am Halteelement angelenkt und schwenkbar am Schlitten gelagert sind. Zum Antrieb weisen die Schwenkhebel seitlich abstehende Kulissenzapfen auf, die mit Kulissenbahnen eines Gehäuses der Haltevorrichtung zusammenwirken, die beim Ausfahren des Schlittens die Schwenkhebel und über diese das Halteelement nach oben schwenken.

Der Erfindung liegt die Aufgabe zugrunde, den Antrieb bzw. die Kulissensteuerung des Halteelements zu verbessern.

Diese Aufgabe wird erfindungsgemäß durch die Merkmale des Anspruchs 1 gelöst. Die erfindungsgemäße Haltevorrichtung weist eine zweite Kulissensteuerung für das Halteelement auf. Die beiden Kulissensteuerungen wirken wie zwei Antriebe zusammen, wobei jede der beiden Kulissensteuerungen einen Teil der Antriebsarbeit und/oder Antriebskraft aufbringt. Die beiden Kulissensteuerungen können mit unterschiedlichen Kraftwirkungsrichtungen auf das Halteelement einwirken, wobei sich die Kraftwirkungsrichtungen beim Verschieben des Schlittens ändern können. Auch ist es möglich, dass die beiden Kulissensteuerungen beim Verschieben des Schlittens nacheinander wirksam werden, dass beispielsweise zu Beginn der Verschiebung die eine und am Ende der Verschiebung die andere Kulissensteuerung den Antrieb des Halteelements bewirkt. Ebenso kann sich der Beitrag beider Kulissensteuerungen zum Bewegen des Halteelements während der Verschiebung des Schlittens ändern. Mit der Angabe, dass die Kulissensteuerungen in Verschieberichtung des Schlittens zueinander versetzt sind soll zum Ausdruck gebracht werden, dass es sich nicht um zwei deckungsgleiche Kulissensteuerungen beispielsweise auf beiden Seiten des Schlittens handelt, sondern um zwei Kulissensteuerungen, die konstruktiv unterschiedlich ausgebildet sind und/oder unterschiedlich wirken. Es können beispielsweise auf beiden Seiten des Schlittens zwei Kulissensteuerungen vorgesehen sein.

Die Erfindung hat den Vorteil, dass die Beanspruchung einer Kulissensteuerung durch das Vorsehen einer zweiten Kulissensteuerung verringert ist. Dies ist bei Haltevorrichtungen, die üblicherweise aus Kunststoff hergestellt sind, ein wesentlicher Aspekt. Weiterer Vorteil der Erfindung ist, dass sich durch das Vorsehen von zwei Kulissensteuerungen ein Aufbringen und Übertragen einer Antriebskraft und eines Antriebsmoments bezüglich ihrer Wirkungsrichtung und ihres Angriffspunkts über die gesamte Verschiebung des Schlittens und Bewegung des Halteelements günstiger gestalten lässt.

Außerdem weist die Haltevorrichtung gemäß der Erfindung eine Führung für das Halteelement auf, die das Halteelement beim Ausfahren des Schlittens nicht nur nach oben, sondern zugleich auch bezüglich des Schlittens in Ausfahrrichtung bewegt. Beim Einfahren des Schlittens ist die Bewegung umgekehrt. Dadurch ist es möglich, das Halteelement weiter in Verschieberichtung des Schlittens zu bewegen als den Schlitten selbst. Dies ermöglicht eine Verkürzung des Verschiebewegs des Schlittens und damit eines erforderlichen Einbauraums für die Haltevorrichtung in beispielsweise einem Armaturenbrett.

Eine Ausgestaltung der Erfindung sieht einen Schwenkhebel als Führung für das Halteelement vor, der schwenkbar am Schlitten und am Halteelement angelenkt ist. Es kann sich auch um ein Schwenkhebelgetriebe mit mehreren Schwenkhebeln handeln. Zusätzlich zur Schwenkbarkeit kann auch eine Schiebemöglichkeit des Schwenkhebels an einem Anlenkpunkt vorgesehen sein.

Eine andere Weiterbildung der Erfindung sieht eine Kulissenführung als Führung für das Halteelement am Schlitten vor. Beide genannten Arten von Führungen, die auch gemeinsam verwirklicht sein können, bilden einfache Führungsmöglichkeiten mit großen Gestaltungsmöglichkeiten für die Bewegung des Halteelements in Bezug auf den Schlitten.

Eine Ausgestaltung der Erfindung sieht mindestens zwei Halteelemente für einen Getränkebehälter vor, die sich beim Ausfahren des Schlittens nach oben bewegen und einen zwischen sie ein- und auf den ausgefahrenen Schlitten gestellten Getränkebehälter gemeinsam seitlich abstützen. Diese Ausgestaltung der Erfindung ermöglicht eine platzsparende Unterbringung der Halteelemente in oder auf dem Schlitten bei Nichtgebrauch, also insbesondere bei eingefahrenem Schlitten.

Eine Ausgestaltung der Erfindung sieht eine Stellfläche mit Ausnehmungen zur Aufnahme von Füßen eines auf den Schlitten gestellten Getränkebehälters vor. Diese Ausgestaltung dient folgendem Zweck: Es sind Kunststoff-(PET)-Flaschen bekannt, die an ihrem Boden nach unten stehende Fortsätze aufweisen, die eine Art Füße der Flasche bilden. Beim Stellen einer solchen Flasche auf den Schlitten gelangen die Füße der Flaschen in die Ausnehmungen, wodurch die Flasche an ihrem Boden besser gehalten ist. Zudem vergrößert sich eine Einstelltiefe der Flasche, die Flasche wird vom Halteelement in größerer Höhe über ihrem Boden seitlich abgestützt und ist dadurch kippsicherer gehalten. Selbstverständlich müssen die Ausnehmungen in Größe und Anordnung passend zur einzustellenden Flasche gestaltet sein. Da die Flaschen genormt sind ist dies unproblematisch. Ein Getränkebehälter ohne solche Füße am Boden, beispielsweise eine Getränkedose, lässt sich problemlos in gewohnter Weise auf den Schlitten der Haltevorrichtung stellen.

Auch wenn es die Erfindung vorsieht, die Merkmale der Unteransprüche gemeinsam mit der zweiten Kulissensteuerung des Hauptanspruchs vorzusehen, ist es grundsätzlich auch möglich, eine Haltevorrichtung mit den Merkmalen eines oder mehrerer Unteransprüche unabhängig von der Kulissensteuerung für das Halteelement auszubilden.

Die Erfindung wird nachfolgend anhand eines in der Zeichnung dargestellten Ausführungsbeispiels näher erläutert. Es zeigen:
- Figur 1: eine erfindungsgemäße Haltevorrichtung in perspektivischer Darstellung; und
- Figur 2: eine vergrößerte Einzelheit gemäß Pfeil II in Figur 1 in einer Schnittdarstellung.

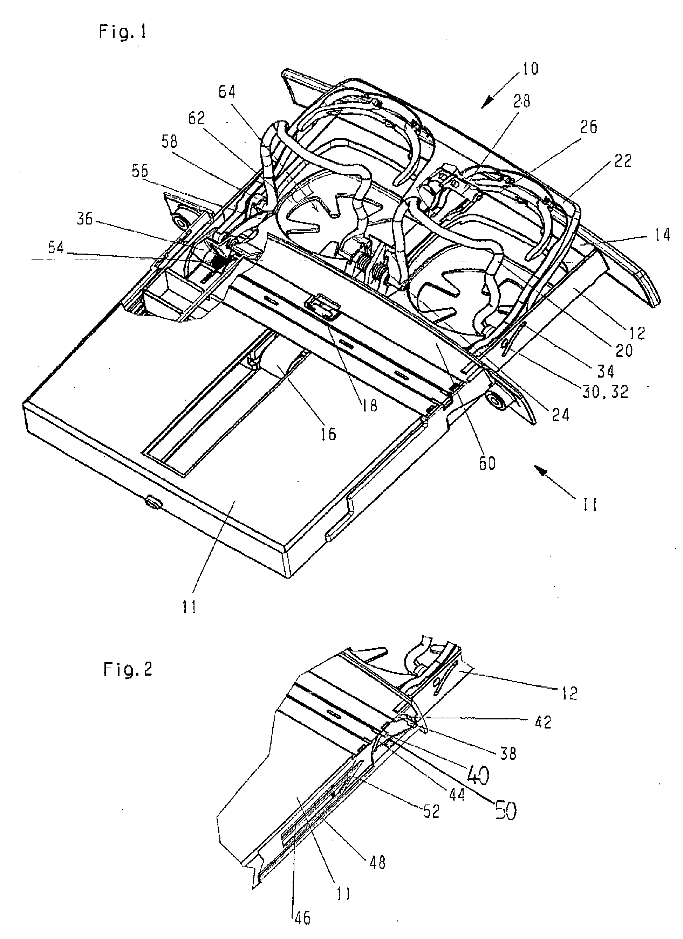

Die in Figur 1 dargestellte, insgesamt mit 10 bezeichnete erfindungsgemäße Haltevorrichtung ist zum Einbau in beispielsweise ein Armaturenbrett eines nicht dargestellten Kraftwagens vorgesehen. Die Haltevorrichtung 10 weist ein schachtelförmiges, flaches Gehäuse 11 auf, das an einer Stirnseite offen ist. Im Gehäuse 11 ist ein Schieber 12 aufgenommen, der im Gehäuse 11 schubladenartig zwischen der dargestellten, ausgefahrenen Stellung und einer nicht dargestellten, in das Gehäuse 11 eingefahrenen Stellung hin- und herverschiebbar geführt ist. In der ausgefahrenen Stellung steht der Schieber 12 aus dem Gehäuse 11 vor, in der eingefahrenen Stellung ist der Schieber 12 im Gehäuse 11 aufgenommen und verschließt dessen offene Stirnseite mit einer Blende 14. Das Gehäuse 11 bildet eine Schiebeführung für den Schlitten 12. Eine an einer Rückseite des Schlittens 12 angebrachte Rollfeder 16, deren freies Ende 18 nahe der offenen Stirnseite des Gehäuses 11 an dem Gehäuse 11 angebracht ist, verschiebt den Schlitten 12 in die ausgefahrene Stellung. Eine in der Zeichnung nicht dargestellte Push-Push-Verriegelungsmechanik hält den Schlitten 12 gegen die Kraft der Rollfeder 16 in der in das Gehäuse 11 eingefahrenen Stellung. Durch leichten Druck auf die Blende 14 lässt sich die Push-Push-Verriegelungsmechanik in an sich bekannter Weise entriegeln.

Auf den Schlitten 12 sind in der ausgefahrenen Stellung zwei Getränkebehälter, beispielsweise Getränkedosen oder Kunststoff-(PET)-Flaschen, nebeneinander stellbar. Für jeden Getränkebehälter weist der Schlitten 12 zwei Halteelemente 20, 22 auf, die schwenkbar am Schlitten 12 angebracht sind und beim Ausfahren des Schlittens 12 nach oben schwenken. Jeweils ein hinteres Halteelement 20 ist bügelartig ausgebildet und wird von einer Schenkelfeder 24 nach oben geschwenkt. Das andere, vordere Halteelement 22 ist ein Kunststoffteil, welches eine federbeaufschlagte, C-förmige Wippe 26 für jeden Getränkebehälter aufweist. Dieses vordere Halteelement 22 weist einen Schwenkhebel 28 und eine Kulissenführung 30 zu seiner beweglichen Führung am Schlitten 12 auf. Der Schwenkhebel 28 ist vorn in einer Mitte des Schlittens 12 angeordnet, sein eines Ende ist schwenkbar am Schlitten 12 und sein anderes Ende schwenkbar am Halteelement 22 gelagert. Bei ausgefahrenem Schlitten 12 und nach oben geschwenktem Halteelement 22 steht der Schwenkhebel 28 schräg nach oben und ist etwas zurück in Richtung des Gehäuses 11 geneigt. Beim nach unten Schwenken bewirkt der Schwenkhebel, dass das Halteelement 22 nicht nur nach unten in den Schlitten 12, sondern zugleich auch bezüglich des Schlittens 12 nach hinten in Richtung des Gehäuses 11 bewegt wird.

Die Kulissenführung 30 ist deckungsgleich auf jeder Seite des Schlittens 12 vorgesehen. Sie weist eine bogenförmig verlaufende Kulissenbahn 32 in jeder Seitenwand des Schlittens 12 auf, in die ein Kulissenzapfen 34 verschiebbar eingreift. Der Kulissenzapfen 34 ist einstückig mit dem vorderen Halteelement 22 und steht von diesem nach außen. Die Kulissenbahn 32 ist so ausgerichtet, dass sich das vordere Halteelement 22 in Bezug auf den Schlitten 12 nach hinten in Richtung des Gehäuses 11 bewegt, wenn es nach unten in den Schlitten 12 abgesenkt wird. Die Schwenkhebelführung und die Kulissenführung 30 bewirken somit eine Bewegung des vorderen Halteelements 22 bezüglich des Schlittens 12 nach hinten in Richtung des Gehäuses 11, wenn das vordere Halteelement 22 in den Schlitten 12 hinein abgesenkt wird. Umgekehrt bewegt sich das vordere Halteelement 22 bezüglich des Schlittens 12 nach vorn, wenn das vordere Halteelement 22 vom Schlitten 12 nach oben bewegt wird. Durch diese Nachvornbewegung gegenüber dem Schlitten 12 lässt sich ein Ausfahrweg des Schlittens 12 verkürzen.

Ein Antrieb bewegt die Halteelemente 20, 22 nach unten, wenn der Schlitten 12 in das Gehäuse 11 verschoben wird. Der Antrieb weist zwei Kulissensteuerungen auf, die in Verschieberichtung des Schlittens 12 hintereinander deckungsgleich auf jeder Seite des Schlittens 12 vorhanden sind. Diese Kulissensteuerungen sind in Figur 2 dargestellt. Die beiden Kulissensteuerungen weisen einen gemeinsamen Schwenkhebel 36 auf, der schwenkbar an Seiten des Schlittens 12 angebracht ist. Vom Schwenkhebel 36 stehen zwei Kulissenzapfen 38, 40 nach außen ab. Die Kulissenzapfen 38, 40 durchgreifen kreisbogenförmige Schlitze 42, 44 in Seiten des Schlittens 12 und wirken mit Kulissenbahnen 46, 48 zusammen, die an Innenseiten von Seitenwänden des Gehäuses 11 angeordnet sind. Eine der beiden Kulissenbahnen 46 weist eine bogenförmig in Einfahrrichtung des Schlittens 12 ansteigende Rampe 50 auf, die den ihr zugeordneten Kulissenzapfen 38 beim Einfahren des Schlittens 12 nach oben bewegt. Die andere Kulissenbahn 48 weist einen ebenfalls bogenförmigen Abschnitt 52 auf, der in Einfahrrichtung des Schlittens 12 nach unten verläuft. Mit diesem Abschnitt 52 kommt der andere Kulissenzapfen 40 in Eingriff, wenn der Schlitten 12 ein Stück weit in das Gehäuse 11 eingeschoben ist. Die Rampe 52 der zweiten Kulissenbahn 48 bewegt den Kulissenzapfen 40 beim Einfahren des Schlittens 12 in das Gehäuse 11 nach unten. Gemeinsam bewirken die beiden Kulissenbahnen 46, 48 und die Kulissenzapfen 38, 40, dass der Schwenkhebel 36 in Einfahrrichtung des Schlittens 12 verschwenkt wird, wenn der Schlitten 12 in das Gehäuse 11 eingefahren wird. Im weiteren Verlauf gehen die beiden Kulissenbahnen 46, 48 in gerade, in Verschieberichtung des Schlittens 12 verlaufende Abschnitte über, in die die Kulissenzapfen 38, 40 beim weiteren Einfahren des Schlittens 12 in das Gehäuse 11 gelangen.

Der Schwenkhebel 36 ist schwenkbar an einem hinteren Ende des vorderen Halteelements 22 angelenkt. Wird der Schwenkhebel 36 beim Einfahren des Schlittens 12 in das Gehäuse 11 in vorstehend beschriebener Weise in Einfahrrichtung des Schlittens 12 verschwenkt, zieht er das ihm zugewandte, hintere Ende des vorderen Halteelements 22 nach hinten, d. h. in Einfahrrichtung des Schlittens 12 und schwenkt über dessen Führungen 28, 30 das Halteelement 22 nach unten in den Schlitten 12. Zugleich wird das Halteelement 22 in weiter oben beschriebener Weise gegenüber dem Schlitten 12 in Einfahrrichtung bewegt. Beim Ausfahren des Schlittens 12 schwenkt ein Schenkelfederelement 54 den Schwenkhebel 36 in Ausfahrrichtung des Schlittens 12, wenn die Kulissenzapfen 38, 40 aus den geraden Abschnitten der Kulissenbahnen 46, 48 frei kommen und in die Bereiche des bogenförmigen Abschnitts 52 und der Rampe 50 der Kulissenbahnen 46, 48 gelangen. Dadurch wird das vordere Halteelement 22 nicht nur nach oben verschwenkt, sondern bewegt sich zugleich auch in oben beschriebener Weise gegenüber dem Schlitten 12 nach vorn, d. h. in dessen Ausfahrrichtung. Dadurch ergibt sich eine vergrößerte Ausfahrweite des vorderen Halteelements 22 aus dem Gehäuse 11 im Vergleich mit dem Schlitten 12.

Die beiden hinteren Halteelemente 20 werden beim Einfahren des Schlittens 12 mit je einem Zughebel 56 nach unten in den Schlitten 12 verschwenkt. Der Zughebel 56 ist schwenkbar am Schwenkhebel 36 und mit einem starr mit dem hinteren Halteelement 20 verbundenen Hebel 56 verbunden. Schenkelfedern 60 schwenken die hinteren Halteelemente 20 beim Ausfahren des Schlittens 12 nach oben. In der ausgefahrenen Stellung des Schlittens 12 und der nach oben geschwenkten Stellung der Halteelemente 20, 22 sind zwei nicht dargestellte Getränkebehälter kippsicher zwischen die Halteelemente 20, 22 einstellbar.

Der Schlitten 12 weist eine plattenförmige Stütze 62 auf, die um einen begrenzten Schwenkwinkel nach unten schwenkbar am Schlitten 12 gelagert ist. Die Stütze 62 dient als Stellfläche für in die Haltevorrichtung 10 eingestellte Getränkebehälter. Die Stütze 62 weist Ausnehmungen 64 für jeden Getränkebehälter auf. Die Ausnehmungen 64 sind so angeordnet und gestaltet, dass Füße bekannter Kunststoffflaschen in die Ausnehmungen 64 eingreifen. Dadurch ist zum einen ein Halt einer solchen Flasche an ihrem Boden verbessert und die Kippsicherheit erhöht. Des Weiteren werden durch die Ausnehmungen 64 die genannten Flaschen tiefer in die Haltevorrichtung 10 eingestellt und werden demzufolge an einer höheren Stelle ihres Umfangs von den Halteelementen 20, 22 abgestützt. Auch dadurch ist die Kippsicherheit in die Haltevorrichtung 10 eingestellter Flaschen erhöht. Beim Ausfahren des Schlittens 12 schwenkt die Stütze 62 um einen begrenzten Schwenkwinkel nach unten. Beim Einfahren des Schlittens 12 in das Gehäuse 11 gleitet die Stütze 62 auf einem vorderen Rand eines Bodens des Gehäuses 11 entlang und wird dadurch nach oben in den Schlitten 12 gedrückt.

## Patentansprüche

1. Haltevorrichtung für einen Getränkebehälter, mit einem Gehäuse (11), mit einem Schlitten (12), der im Gehäuse (11) mit einer Schiebeführung schubladenartig zwischen einer eingefahrenen und einer ausgefahrenen Stellung hin- und herverschiebbar geführt ist, wobei in der ausgefahrenen Stellung ein Getränkebehälter auf den Schlitten (12) stellbar ist, und mit einem Halteelement (22), das beweglich am Schlitten (12) angebracht ist, das von einer Kulissensteuerung (38, 46, 50), die auf der Seite des Schlittens (12) und des Gehäuses (11) vorhanden ist, beim Ausfahren des Schlittens (12) nach oben und/oder beim Einfahren des Schlittens (12) wieder nach unten bewegt wird und das in der nach oben bewegten Stellung einen auf den ausgefahrenen Schlitten gestellten Getränkebehälter seitlich abstützt, wobei die Haltevorrichtung (10) eine zweite, in Verschieberichtung des Schlittens (12) gegenüber der ersten Kulissensteuerung (38, 46, 50) versetzte Kulissensteuerung (40, 48, 52) zum nach oben und/oder nach unten Bewegen des Halteelements (22) beim Aus-und Einfahren des Schlittens (12) aufweist, die auf der Seite des Schlittens (12) und des Gehäuses (11) vorhanden ist, und wobei die Haltevorrichtung (10) eine Führung (28, 30, 32, 34) für das Halteelement (22) aufweist, die das Halteelement (22) beim Ausfahren des Schlittens (12) bezüglich des Schlittens (12) nach oben und in Ausfahrrichtung des Schlittens (12) führt.

2. Haltevorrichtung nach Anspruch 1, **dadurch gekennzeichnet, dass** die Führung für das Halteelement (22) einen Schwenkhebel (28) aufweist, der schwenkbar am Schlitten (12) und am Halteelement (22) angelenkt ist.

3. Haltevorrichtung nach Anspruch 1, **dadurch gekennzeichnet, dass** die Führung für das Halteelement (22) eine Kulissenführung (30, 32, 34) aufweist.

4. Haltevorrichtung nach Anspruch 1, **dadurch gekennzeichnet, dass** die Haltevorrichtung (10) mindestens zwei Halteelemente (20, 22) für einen Getränkebehälter aufweist, die sich beim Ausfahren des Schlittens (12) nach oben bewegen und die in der nach oben bewegten Stellung einen auf den Schlitten (12) gestellten Getränkebehälter an verschiedenen Stellen seines Umfangs seitlich abstützen.

5. Haltevorrichtung nach Anspruch 1, **dadurch gekennzeichnet, dass** der Schlitten (12) der Haltevorrichtung (10) eine Stellfläche (62) mit Ausnehmungen (64) zur Aufnahme von Füßen eines auf den Schlitten (12) gestellten Getränkebehälters aufweist.

## Claims

1. Holding device for a drinks container, having a housing (11), having a carriage (12) which is so guided in the housing (11) by a slideway in the manner of a drawer as to be displaceable back and forth between an inserted and an extended position, it being possible to place a drinks container on the carriage (12) in the extended position, and having a holding element (22) that is movably attached to the carriage (12), that is moved by a control track arrangement (38, 46, 50) - provided on the side of the carriage (12) and of the housing (11) - in an upward direction when the carriage (12) is being extended and/or back in a downward direction when the carriage (12) is being inserted and that, in the moved-up position, provides lateral support to a drinks container placed on the extended carriage, wherein the holding device (10) has a second control track arrangement (40, 48, 52) that is offset from the first control track arrangement (38, 46, 50) in the direction of displacement of the carriage (12), for moving the holding element (22) in an upward and/or downward direction when the carriage (12) is being extended and inserted, and that is provided on the side of the carriage (12) and of the housing (11), and wherein the holding device (10) has a means (28, 30, 32, 34) for guiding the holding element (22), which guide means guides the holding element (22) relative to the carriage (12) in an upward direction and in the extension direction of the carriage (12), when the carriage (12) is being extended.

2. Holding device according to claim 1, **characterised in that** the means for guiding the holding element (22) has a pivot lever (28), which is pivotally connected at the carriage (12) and at the holding element (22).

3. Holding device according to claim 1, **characterised in that** the means for guiding the holding element (22) has a guide track arrangement (30, 32, 34).

4. Holding device according to claim 1, **characterised in that** the holding device (10) has at least two holding elements (20, 22) for one drinks container, which holding elements move in an upward direction when the carriage (12) is being extended and, in the moved-up position, provide lateral support to a drinks container placed on the carriage (12), at different locations on the periphery of the container.

5. Holding device according to claim 1, **characterised in that** the carriage (12) of the holding device (10) has a support surface (62) having cut-outs (64) for accommodating feet of a drinks container placed on the carriage (12).

## Revendications

1. Support pour un contenant de boisson, comprenant un boîtier (11), un chariot (12) guidé dans le boîtier (11) à la manière d'un tiroir par une coulisse, de manière à pouvoir aller et venir entre une position rentrée et une position sortie, un contenant de boisson pouvant être posé sur le chariot (12) lorsque ce dernier est en position sortie, comprenant également un élément de retenue (22) monté de façon mobile sur le chariot (12), qui est déplacé par une commande à coulisse (38, 46, 50) située sur le côté du chariot (12) et du boîtier (11), vers le haut lorsque le chariot (12) sort et/ou redescend lorsque le chariot (12) rentre, et qui, lorsqu'il est en position haute, soutient par le côté un contenant de boisson posé sur le chariot sorti, le support (10) présentant une seconde commande à coulisse (40, 48, 52) décalée par rapport à la première commande à coulisse (38, 46, 50) dans la direction de déplacement du chariot (12), pour déplacer l'élément de retenue (22) vers le haut et/ou vers le bas lorsque le chariot (12) sort et rentre, laquelle se trouve sur le côté du chariot (12) et du boîtier (11), et le support (10) présentant un dispositif de guidage (28, 30, 32, 34) pour l'élément de retenue (22), qui, lorsque le chariot (12) est sorti, guide l'élément de retenue (22) vers le haut par rapport au chariot (12) et dans le sens de sortie du chariot (12).

2. Support selon la revendication 1, **caractérisé en ce que** le dispositif de guidage pour l'élément de retenue (22) présente un levier pivotant (28) qui est relié de manière articulée au chariot (12) et à l'élément de retenue (22).

3. Support selon la revendication 1, **caractérisé en ce que** le dispositif de guidage pour l'élément de retenue (22) présente un guide à coulisse (30, 32, 34).

4. Support selon la revendication 1, **caractérisé en ce que** le support (10) présente au moins deux éléments de retenue (20, 22) pour un contenant de boisson, qui se déplacent vers le haut lorsque le chariot (12) sort et qui, lorsqu'ils sont dans la position haute, soutiennent un contenant de boisson posé sur le chariot (12) en différents endroits de son pourtour.

5. Support selon la revendication 1, **caractérisé en ce que** le chariot (12) du support (10) présente une surface d'appui (62) dotée d'évidements (64) destinés à recevoir des pieds d'un contenant de boisson posé sur le chariot (12).
